# EUROPÄISCHE PATENTSCHRIFT

(11) **EP 2 680 936 B1**
(45) Veröffentlichungstag und Bekanntmachung des Hinweises auf die Patenterteilung: **01.02.2017**
(21) Anmeldenummer: 12709037.1
(22) Anmeldetag: 02.03.2012
(51) Int. Cl.: B01D 29/41, B29C 47/68

(54) **FILTERELEMENT FÜR DIE FILTRIERUNG EINES FLUIDS UND DARAUS GEBILDETE FILTEREINHEIT**
FILTER ELEMENT FOR FILTERING A FLUID AND FILTER UNIT FORMED THEREFROM
ÉLÉMENT FILTRANT SERVANT À FILTRER UN FLUIDE ET ENSEMBLE FILTRE FORMÉ DUDIT ÉLÉMENT

(30) Priorität: 02.03.2011 DE 102011001015
(43) Veröffentlichungstag der Anmeldung: 08.01.2014
(73) Patentinhaber: Nordson Holdings S.à r.l. & Co. KG, 40699 Erkrath (DE)
(72) Erfinder: WÖSTMANN, Stefan, 48336 Sassenberg (DE); SCHRÖDER, Christian, 48159 Münster (DE)
(74) Vertreter: Eisenführ Speiser
(86) Internationale Anmeldenummer: PCT/EP2012/053690
(87) Internationale Veröffentlichungsnummer: WO 2012/117114

(56) Entgegenhaltungen:
- EP-A2- 0 327 394
- DE-A1- 4 212 928
- US-A- 5 637 213

## Beschreibung

Die Erfindung betrifft ein Filterelement für die Filtrierung eines Fluids und eine daraus gebildete Filtereinheit mit den Merkmalen des Oberbegriffs des Anspruchs 1.

Zur Filtration von hochviskosen Medien wie Kunststoffschmelze werden üblicherweise flächige Siebelemente verwendet. Verunreinigungen in der Kunststoffschmelze wie beispielsweise Aluminiumpartikel oder Papierreste setzen sich an den Filtermedien der Filterelemente ab. Die wirksame Filterfläche ist dabei im Wesentlichen auf den Öffnungsquerschnitt der Siebkavität begrenzt und steht in direktem Zusammenhang mit der Baugröße der Filtriervorrichtung, beispielsweise eines Siebbolzenwechslers.

Um diesem Nachteil zu begegnen, werden mit Erfolg Filterelemente eingesetzt, wie sie in der DE 42 12 928 A1 beschrieben sind und die aus Filterscheiben in Form von mehrschichtigen Scheiben bestehen, die mindestens eine Filterschicht und eine Stützschicht aufweisen, die vorzugsweise von einer Deckschicht übergriffen werden. Diese Filterscheiben weisen wiederum eine ringförmige Grundfläche auf, und ihre inneren Randzonen sind jeweils mit den beiden Stirnflächen eines Ringes verbunden. Die äußeren Randzonen der Filterscheiben können dabei über Stirnflächen von Ringen miteinander verbunden sein. Durch die Scheibenform und die Vielzahl der übereinander gestapelten einzelnen Scheibenfilterelemente kann die wirksame Filterfläche bei einer solchen Filtereinheit deutlich vergrößert werden.

Die Filtereinheiten werden insbesondere bei der Filtration von Kunststoffschmelze in eine Siebkavität eines so genannten Siebbolzenwechslers eingesetzt. Dabei wurde jedoch beobachtet, dass sich die einzelnen Filterelemente im anstehenden Fluiddruck wegbiegen können, wodurch es zur Absperrung einzelner Fließwege ebenso kommen kann wie zu Beschädigungen und daraus folgenden Undichtigkeiten des Filterelements.

Bei zunehmender Verschmutzung ist bei vielen Siebbolzenwechslern vorgesehen, dass der Schmelzestrom auf eine andere Siebkavität mit einem anderen Filterelement umgeleitet wird. Während über letztere der Produktionsstrom aufrecht erhalten wird, kann die verschmutzte Filtereinheit durch einen Rückspülvorgang von den anhaftenden Partikeln befreit werden. Hierzu wird ein Teil der Schmelze in einer zum Normalbetrieb umgekehrtem Fließrichtung durch die Filterelemente der Filtereinheit geleitet, so dass die an den Filtermedien der Filterelemente haftenden Partikel gelöst und weg gespült werden.

Allerdings ist der bei normalen, flächigen Siebelementen mögliche Rückspülvorgang bei den gattungsgemäßen Filterelementen mit einer Vielzahl von Scheibenfiltern nicht möglich, da das feine metallische Filtergewebe der Filterelemente in der umgekehrten Fließrichtung nicht abgestützt ist und daher bei einer Rückspülung reißen könnte.

Aufgabe der vorliegenden Erfindung ist es somit, ein Filterelement der eingangs genannten Art so weiter zu entwickeln, dass ein Verbiegen der Filterelemente im Produktionsbetrieb vermieden und somit eine Rückspülung ermöglicht wird.

Diese Aufgabe wird durch ein Filterelement mit den Merkmalen des Anspruchs 1 gelöst.

Im Sinne der Erfindung werden unter einem "Ring" nicht nur kreisrunde Formen, sondern auch anders geformte, geschlossene Linien, wie Ellipsen, langlochförmige Konturen oder polygonale Linienzüge verstanden.

Die inneren Stützplatten stützen die Filtergewebe gegen den im Produktionsbetrieb vorzugsweise von außen einwirkenden Fluiddruck ab. Bei Fließrichtung im Produktionsbetrieb liegen die Filterronden mit einem Teil ihres Außenkantenbereichs gelangt das Fluid bzw. die Kunststoffschmelze von außen auf das Gewebe der Filterronde, und Schmutz wird an der Außenseite zurückgehalten. Der Fluss geht weiter durch die Ausnehmungen der inneren Stützplatten und in den Hohlraum des Filterelements hinein.

Zusätzlich sind mit Ausnehmungen versehene äußere Stützplatten vorgesehen, so dass die Filterronden sowohl nach innen hin wie auch an den Außenseiten des Filterelements abgedeckt sind bzw. flächig abgestützt werden kann. Damit ist ein Wechsel der Fließrichtung möglich, also auch ein Rückspülbetrieb, bei dem durch Umkehrung der Fließrichtung Anhaftungen von den Filterronden abgespült werden.

Der Aufbau eines erfindungsgemäßen Filterelements ist sehr robust. Das Filterelement kann sehr einfach zerlegt und gereinigt werden, insbesondere kann es einer thermischen Behandlung unterzogen werden, ohne beschädigt zu werden, um beispielsweise Reste von Kunststoffschmelze auszubrennen.

Bevorzugt werden die Stützplatten zusätzlich durch wenigstens ein innen liegendes Distanzhalterelement auf Abstand zueinander gehalten, so dass auch bei hohem Druck ein innerer Hohlraum offen gehalten wird, der als Fließkanal dient und der zum Rand der zentralen Bohrung des Filterelements hin offen ist.

Die Distanzhalterelemente können spinnennetzförmige oder wagenradartige Gebilde, die gesondert einzulegen sind. Sie können aber auch durch vorspringende Absätze am Gehäusering, Spannring oder Außenring gebildet sein.

Die Distanzhalterelemente können weiterhin durch gewölbte Stützplatten gebildet sein, die sich in Produktionsfließrichtung gesehen konkav oder konvex nach ausdehnen, wobei die Wölbungen so zueinander gewandt sind, dass sie sich partiell berühren, z.B. bei konkaven Formen im Zentrum und bei konvexen Formen im peripheren Randbereich, wodurch die übrigen Flächenbereiche der Stützplatten auf Abstand zueinander gehalten sind.

Das Filtergewebe kann sich aufgrund seiner Flexibilität gut an die dreidimensionale Form der Stützplatten anpassen, so dass es abgestützt bleibt, auch wenn die Abstützfläche nicht in einer Ebene liegt.

Auch die äußeren Stützplatten können gewölbt sein, und zwar einmal an der Innenseite, um der Form der inneren Stützplatten zu folgen, damit zu große Dehnungen im dazwischen liegenden Filtergewebes verhindert werden und dieses in beiden Fließrichtungen vollflächig abgestützt bleibt. Zudem kann eine nach außen ragende Wölbung in gleicher Weise einen äußeren Fließkanal abstützen, indem sich die Wölbung wenigstens eines Filterelements an ein benachbartes Filterelement anlegt.

Die jeweiligen gewölbten inneren und äußeren Oberflächen der inneren und äußeren Stützplatten müssen nicht unbedingt parallel sein, das heißt, die Stützplatte muss nicht unbedingt nach Art eines tiefgezogenen Bleches ausgebildet sein, sondern kann auch einen beidseitig bauchigen Körper bilden.

Bei den Verbindungselementen handelt es sich vorzugsweise um Schrauben mit Schraubenköpfen und Muttern, so dass mit überall vorhandenen Werkzeugen ein Zerlegen und Zusammensetzen leicht möglich ist.

Ale einzige Verschleißteile müssen nur die Filterronden ausgetauscht werden, wenn deren metallisches, gegebenenfalls mehrlagiges Filtergewebe zu stark beschädigt ist.

Die äußeren Stützplatten können jeweils in den Spannring integriert sein. Sie können aber auch als separate Platten unter den Spannring gelegt werden.

Vorzugsweise sind die Stützplatten als Lochplatten ausgebildet, die einfach zu fertigen sind und durch ihre Gitterstruktur eine kleinflächige Abstützung von Filtergewebe ermöglichen.

Vorzugsweise besitzen die Filterronden einen Innenring und einen Außenring, welche vorzugsweise aus einem Nicht-Eisen-Metall, insbesondere aus Kupfer, bestehen. Damit wird eine metallische Dichtung geschaffen, einmal am Innenumfang als Abdichtung zu einem innen liegenden Stützrohr, auf dem die Filterelemente gestapelt sind, und einmal am Außenumfang als Abdichtung gegenüber dem Außenring.

Möglich ist aber auch, die ringscheibenförmigen Filterronden mit Übermaß am Innen- und/oder Außenrand gegenüber den angrenzenden Bauteilen zu fertigen und diese dann entsprechend auf die angrenzenden Bauteile anzupressen.

Der Außenring kann einteilig mit dem Spannring oder der inneren Stützplatte ausgebildet sein.

Eine bevorzugte Ausführungsform der Erfindung sieht vor, gleichartige innere Stützplatten zu verwenden, die am Außenumfang jeweils mittig auf einem Teil-Außenring münden. Es ergibt sich dann ein T-förmiger Querschnitt am Rand jeder inneren Stützplatte. Es können zur Bildung eines Filterelements je zwei Stück von insgesamt drei gleichartigen Teilen verwendet werden, nämlich zwei gleiche innere Stützplatten mit Teil-Außenring, zwei gleiche Filterronden und zwei gleiche äußere Stützplatten, die zugleich randseitig den Spannring integrieren. Damit ist eine kostengünstige Herstellung und Lagerhaltung ebenso möglich wie eine einfache Handhabung.

Eine aus mehreren erfindungsgemäßen Filterelementen gebildete Filtereinheit gemäß Anspruch 12 ist einfach aufzubauen und zu Reinigungszwecken ebenso leicht zu demontieren, da die erfindungsgemäßen Filterelemente durch ihr massives äußeres Gehäuse, bestehend aus Außenring, Stützplatten und Spannringen unempfindlich gegenüber Stößen und Schlägen sind.

Dadurch, dass die Verbindungselemente an den Stirnseiten des fertigen Filterelements überstehen, können die Überstände gleichzeitig als Abstandshalter dienen, wodurch Fließkanäle zwischen benachbarten Filterelementen ausgebildet werden. Aufeinander gestapelte Filterelemente stützen sich somit gegeneinander ab, und können vom Fluiddruck nicht weggebogen werden.

Eine bevorzugte Ausführungsform sieht ein zusätzliches Grobfilterelement vor, das die Filterelemente umschließt und das sich zwischen einem Boden der Filtereinheit oder dem Boden einer Siebkavität, in welche die Filtereinheit eingesetzt ist, und deren Kopfplatte erstreckt.

An dem Grobfilterelement werden beispielsweise Partikel wie Aluminium- oder Papierreste zurückgehalten, die gerade beim Kunststoffrecycling anfallen und die teilweise so groß sind, dass sie durch eine Rückspülung aus dem Fließkanal zwischen den Filterelementen nicht mehr oder nur schwer entfernbar wären. Damit wird eine Kaskadenfiltration erreicht, bei der grobe Partikel gar nicht mehr in das Innere der eigentlichen Filtereinheit gelangen. Deren Aufgabe ist somit auf die Abscheidung feiner Artikel oder Agglomerate beschränkt, was zu einer deutlich erhöhten Standzeit führt.

Die Erfindung wird nachfolgend mit Bezug auf die Zeichnung näher erläutert. Die Figuren zeigen im Einzelnen:
- Fig. 1: ein Filterelement gemäß einer ersten Ausführungsform in Explosionsdarstellung;
- Fig. 2: ein montiertes Filterelement gemäß der ersten Ausführungsform in perspektivischer Darstellung;
- Fig. 3: mehrere auf einem Stützrohr gestapelte Filterelemente im Schnitt und
- Fig. 4: einen randseitigen Ausschnitt einer Schnittansicht einer zweiten Ausführungsform eines Filterelements; und

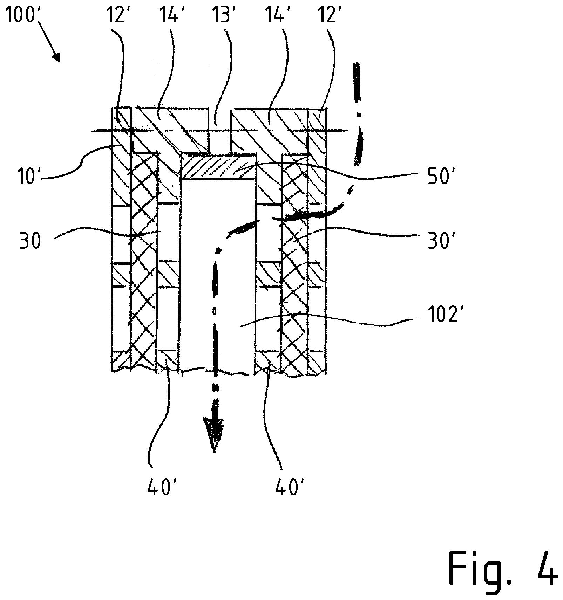

- Fig. 4: einen randseitigen Ausschnitt einer Schnittansicht einer dritten Ausführungsform eines Filterelements.

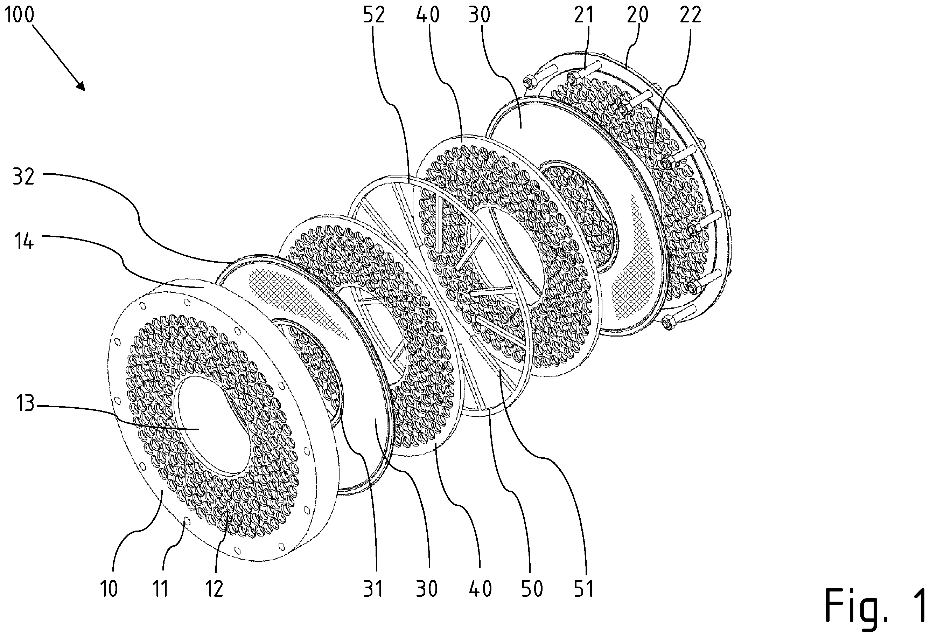

Figur 1 zeigt ein Filterelement 100 mit seinen Bestandteilen in lagerichtiger Anordnung vor der Montage.

Wesentliche Bestandteile sind in der Montagereihenfolge von links nach rechts:
- Ein Spannring 10 mit Durchgangsbohrungen 11 zur Aufnahme von Schrauben, mit einem integrierten zylindrischen Außenring 14 und mit einer integrierten Stützplatte 12.
- Eine erste ringscheibenförmige Filterronde 30, welche an ihrem Innenrand mit einem Innenring 31 und an ihrem Außenrand mit einem Außenring 32 eingefasst ist, welche Ringe 31, 32 aus einem Kupferprofil bestehen.
- Eine als Lochscheibe ausgebildete, innen liegende, erste Stützplatte 40.
- Ein Distanzhalterelement 50, welches die erste innere Stützplatte 40 in einem Abstand zu einer zweiten inneren Stützplatte 40 hält.
- Eine zweite Filterronde 30.
- Ein Spannring 20 mit Durchgangsbohrungen zur Aufnahme von Schrauben 21. Der Spannring 20 besitzt bei dieser Ausführungsform, wie der Spannring 10 auch, eine integrierte zentrale Stützplatte 22.

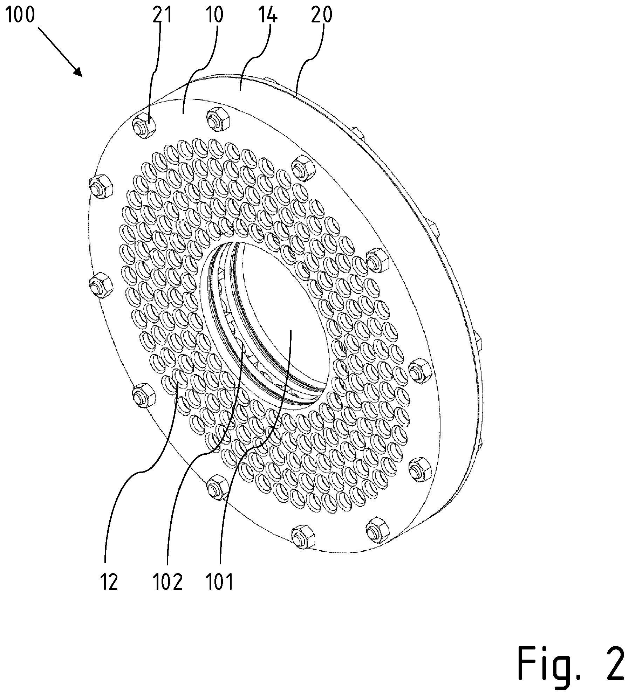

Figur 2 zeigt das fertig montierte Filterelement 100. Sichtbar ist darin, dass dort, wo das Distanzhalterelement 50 in der Mitte angeordnet worden ist, beim fertigen Filterelement 100 ein Fließkanal 102 ausgebildet ist, der zum Rand der inneren Aufnahmebohrung 101 hin offen liegt.

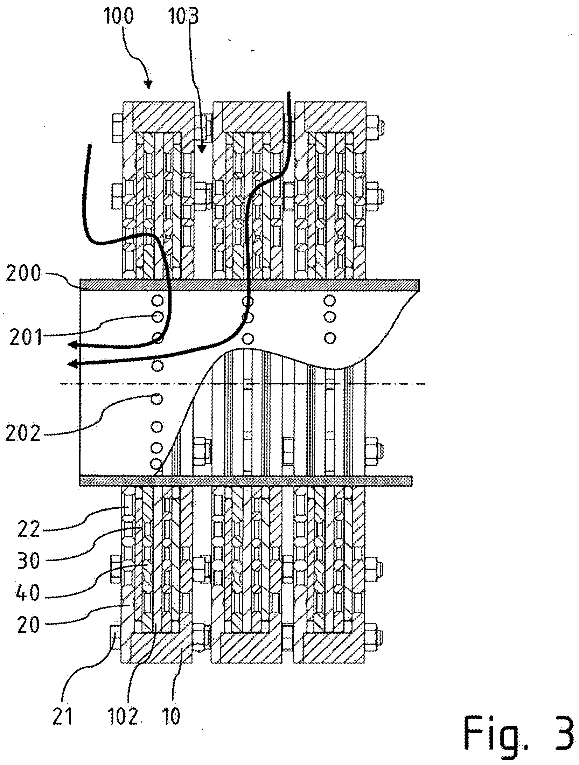

In Fig. 3 ist ein Stapel von insgesamt drei Filterelementen 100 gezeigt, die auf ein nur schematisch angedeutetes Stützrohr 130 aufgezogen sind. Dabei liegen die Innenringe 31 der Filterronden 30 dicht am Außenmantel des Stützrohrs 130 an. Durch die Außenringe 32 wird eine Abdichtung gegenüber dem Innenmantel des Außenrings 14 bewirkt. Benachbarte Filterelemente 100 halten sich durch die Schraubenköpfe und Schraubenschaftüberstände bzw. die Muttern gegenseitig auf Abstand, wodurch sich zwischen zwei Filterelementen 100 ein äußerer Fließkanal 103 ausbildet.

Die Fließrichtung im Produktionsbetrieb verläuft wie durch die Pfeile angedeutet: vom Außenumfang der Filtereinheit 100 in die äußeren Fließkanäle 103 hinein, von dort durch die Filterronden 30 hindurch bis in die inneren Fließkanäle 102. Letztere sind, wie aus den Figuren 2 und 4 erkennbar, zur zentralen Aufnahmebohrung 101 in den Filterelementen 100 hin offen. Dadurch kann das Fluid durch Bohrungen 131 im Rohrmantel des Stützrohrs 130 in dessen Innenraum 130 abfließen.

Fig. 4 zeigt einen Ausschnitt aus dem Randbereich eines Filterelements 100' gemäß einer zweiten Ausführungsform. Die innere Stützplatte 40' geht hier jeweils nahtlos in einen Teil-Außenring 14' über, so dass sich für diese Einheit im Randbereich ein T-förmiger Querschnitt ergibt. Durch die vorzugsweise spiegelsymmetrische Ausbildung können zwei identische Stützplatten 40' mit Teil-Außenring 14' für beide Seiten verwendet werden. Ein Distanzring 50' wird dazwischen eingeklemmt und sorgt für eine Abdichtung des inneren Hohlraums 102' zum Außenumfang hin. Um die Abdichtung zu ermöglichen, hat der Distanzring 50' eine größere Höhe als die beiden nach innen weisenden Überstände der Teil-Außenringe 14' zusammen. Somit verbleibt zwischen den Teil-Außenringen 14' ein Luftspalt 13'. Möglicht wird dadurch, mit einer Verschraubung, die hier nur angedeutet ist, zwei identische Einheiten aus äußeren Stützplatten 12', Filterelementen 30' und inneren Stützplatten 40' unter Einschluss des Distanzrings 50' gegeneinander zu verspannen, so dass sich insgesamt ein Filterelement 100' ergibt, das eine nach außen abgedichtete Einheit ist. Die äußeren Stützplatten 12' sind hierbei in ihrem äußeren Randbereich als Spannringe 10' ausgebildet, das heißt, sie besitzen in diesem Bereich keine Durchbrechungen zum inneren Hohlraum hin, sondern nur Ausnehmungen zur Aufnahme von Schrauben und andere Verbindungselementen.

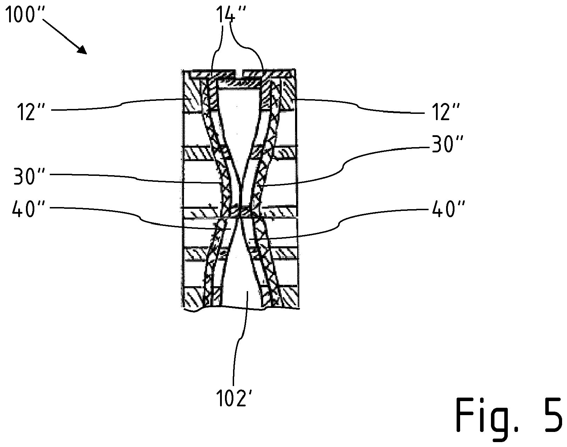

Figur 5 zeigt eine dritte Ausführungsform eines Filterelements 100", die randseitig so ausgebildet ist wie die zuvor beschrieben zweite Ausführungsform eines Filterelements 100", nämlich mit Teil-Außenringen 14", die sich außen an die inneren Stützplatten 40" anschließen. Bei dem Ausführungsbeispiel sind die Stützplatten 40" jedoch - in Bezug auf die Fließrichtung von außen nach innen - konkav gewölbt. Die vorstehenden Bereiche stoßen aneinander, jedoch sind die konkaven Bereiche vorzugsweise nicht ringförmig über den gesamten Teilkreis ausgebildet, sondern bestehen aus mehrerer einzelnen Buckel, so dass auch radiale Fließwege von den äußeren Bereichen des Hohlraums 102' zur Austrittsöffnung am Innenrand offen bleiben.

Die äußeren Stützplatten 12" mit den integrierten Spannringen sind bei diesem Ausführungsbeispiel an der Außenoberfläche eben, wobei sie innen parallel zur Kontur der inneren Stützplatte sind. Dadurch wird ein dazwischen eingelegtes, ebenfalls dreidimensional gewölbtes Filterelement 30" in beiden Fließrichtungen abgestützt ohne zu überstrecken.

## Patentansprüche

1. Filterelement (100; 100'; 100") für die Filtrierung eines Fluids, das wenigstens folgende, in dieser Reihenfolge entlang einer Mittelachse angeordnete Einzelteile umfasst:
- einen an einer Stirnseite des Filterelements (100;100') angeordneten ersten Spannring (10; 10') ;
- eine erste Filterronde (30; 30'; 30"),
- eine erste mit Ausnehmungen versehene innere Stützplatte (40; 40'; 40") zur Abstützung der ersten Filterronde (30; 30'; 30");
- eine zweite mit Ausnehmungen versehene, innere Stützplatte (40; 40'; 40");
- eine zweite, an der zweiten inneren Stützplatte (40; 40'; 40") angeordnete Filterronde (30; 30'; 30"), und
- einen an der anderen Stirnseite angeordneten zweiten Spannring (20; 10'), der über Verbindungselemente (21) mit dem ersten Spannring (10) verbunden ist,
- wobei zwischen der ersten und zweiten inneren Stützplatte (40; 40'; 40") ein innerer Fließkanal (102; 102') gebildet ist,
**dadurch gekennzeichnet, dass** die Filterronden (30; 30'; 30") und die inneren Stützplatten (40; 40'; 40") innerhalb eines Gehäuses angeordnet sind, das durch die Spannringe (10, 20; 10'), wenigstens einen Außenring (14; 14'; 14"), und durch mit Ausnehmungen versehene äußere Stützplatten (12, 22; 12', 12") gebildet ist, welche die Filterronden (30; 30'; 30") jeweils außen abdecken.

2. Filterelement (100; 100') nach Anspruch 1, **dadurch gekennzeichnet, dass** zwischen den inneren Stützplatten (40, 40') wenigstens ein Distanzhalterelement (50, 50') zur Ausbildung des inneren Fließkanals (102; 102') angeordnet ist.

3. Filterelement (100") nach Anspruch 1, **dadurch gekennzeichnet, dass** wenigstens eine innere Stützplatte (40") durch an zur Abstützung des inneren Fließkanals (102') zumindest an ihrer Innenseite gewölbt ausgebildet ist.

4. Filterelement (100") nach wenigstens einem der Ansprüche 1 bis 3, **dadurch gekennzeichnet, dass** wenigstens eine äußeren Stützplatte (12") an ihrer inneren Oberfläche gewölbt sind.

5. Filterelement nach wenigstens einem der Ansprüche 1 bis 4, **dadurch gekennzeichnet, dass** wenigstens eine äußere Stützplatte an ihrer äußeren Oberfläche gewölbt ist.

6. Filterelement (100; 100'; 100") nach wenigstens einem der Ansprüche 1 bis 5, **dadurch gekennzeichnet, dass** wenigstens eine äußere Stützplatte (12, 22; 12'; 12") in den Spannring (10, 20; 10') integriert ist.

7. Filterelement (100) nach wenigstens einem der Ansprüche 1 bis 6, **dadurch gekennzeichnet, dass** die Filterronde (30) einen Innenring (31) und einen Außenring (32) umfasst, zwischen denen wenigstens ein ringförmiges Filtermedium (33) gehalten ist.

8. Filterelement (100) nach Anspruch 7, **dadurch gekennzeichnet, dass** der Innenring (31) und/oder der Außenring (32) der Filterronden (30) aus einem Nicht-Eisen-Metall besteht/bestehen.

9. Filterelement nach wenigstens einem der Ansprüche 1 bis 8, **dadurch gekennzeichnet, dass** dem Filterelement (100) ein Stützrohr zugeordnet und die Filterronde ringscheibenförmig ist und an ihrem Innenrand ein Untermaß gegenüber dem Außendurchmesser eines innen anzuordnenden Stützrohrs und/oder an ihrem Außenrand ein Übermaß gegenüber dem Innendurchmesser des Außenrings aufweist.

10. Filterelement (100) nach wenigstens einem der Ansprüche 1 bis 9, **dadurch gekennzeichnet, dass** der Außenring (14) einteilig mit einem Spannring (10) ausgebildet ist.

11. Filterelement (100'; 100") nach wenigstens einem der Ansprüche 1 bis 10, **dadurch gekennzeichnet, dass** das Filterelement zwei gleichartige innere Stützplatten(40'; 40") umfasst, die am Außenumfang jeweils mittig auf einem Teil-Außenring (14'; 14") münden, wobei sich ein T-förmiger Querschnitt im jeweiligen Randbereich der inneren Stützplatte (40'; 14") ergibt.

12. Filterelement (100'; 100") nach einem der vorstehenden Ansprüche,
**dadurch gekennzeichnet, dass** die Verbindungselemente (21) als Schrauben mit Schraubenköpfen und Muttern ausgebildet sind.

13. Filtereinheit für eine Filtriereinrichtung, wenigstens umfassend:
- ein Stützrohr (130) mit einem Rohrmantel, das mehrere Ausnehmungen (131) im Rohrmantel aufweist,
- mehrere gestapelte Filterelemente (100; 100') nach wenigstens einem der vorhergehenden Ansprüche, die auf dem Stützrohr (130) zentriert sind,
wobei die Verbindungselemente (21) über den Spannring (20) nach außen vorstehen und wobei durch deren Überstand zwischen benachbarten Filterelementen (100; 100') ein Eintrittsfließkanal (103) ausgebildet ist, welcher sich in einem Fließkanal fortsetzt, welcher durch die Filterronden (30) hindurch in den inneren Fließkanal (102) der Filterelemente (100, 100') bis zu jeweils wenigstens einer Ausnehmung (131) im Stützrohr (130) führt;
- und eine am Stützrohr (30) angebrachte und den Stapel von Filterelementen (100; 100') überdeckende Kopfplatte.

14. Filtereinheit nach Anspruch 13, **gekennzeichnet durch** ein zusätzliches Grobfilterelement, das die Filterelemente (100) umschließt und das sich zwischen einem Boden der Filtereinheit oder dem Boden einer Siebkavität, in welche die Filtereinheit eingesetzt ist, und der Kopfplatte der Filtereinheit erstreckt.

## Claims

1. A filter element (100; 100'; 100") for filtering a fluid, comprising at least the following parts arranged in this order along a middle axis:
- a first clamping ring (10; 10') arranged on an end face of the filter element (100; 100').
- a first filter disk (30; 30'; 30"),
- a first inner supporting plate (40; 40'; 40") provided with holes, for supporting the first filter disk (30; 30'; 30)
- a second inner supporting plate (40; 40'; 40") provided with holes;
- a second filter disk (30; 30'; 30") arranged on the second inner supporting plate (40; 40'; 40"), and
- a second clamping ring (20; 10') which is arranged on the other end face and is connected to the first clamping ring (10) by means of connecting elements (21),
- an inner flow channel (102; 102') extending between the first and second inner supporting plates (40; 40'; 40");
**characterized in that** the filter disks (30; 30'; 30") and the inner supporting plates (40; 40'; 40") are arranged within a housing which is formed by the clamping rings (10, 20; 10'), at least one outer ring (14; 14'; 14") and by outer supporting plates (12, 22; 12', 12") each being provided with holes and covering a respective filter disk (30; 30'; 30") on the outside.

2. The filter element (100; 100') according to claim 1, **characterized in that** at least one spacer member (50, 50') is arranged between the inner supporting plates (40, 40') to form the inner flow channel (102; 102').

3. The filter element (100") according to claim 1, **characterized in that** at least one inner supporting plate (40") is dome-shaped on its inner side at least in order to support the inner flow channel (102').

4. The filter element (100") according to at least one of claims 1 to 3, **characterized in that** at least one outer supporting plate (12") is dome-shaped on its inner surface.

5. The filter element according to at least one of claims 1 to 4, **characterized in that** at least one outer supporting plate is dome-shaped on its outer surface.

6. The filter element (100; 100'; 100") according to at least one of claims 1 to 5, **characterized in that** at least one outer supporting plate (12, 22; 12'; 12") is integrated in the clamping ring (10, 20; 10').

7. The filter element (100) according to at least one of claims 1 to 6, **characterized in that** the filter disk (30) comprises an inner ring (31) and an outer ring (32), between which at least one annular filter medium (33) is held.

8. The filter element (100) according to claim 7, **characterized in that** the inner ring (31) and/or the outer ring (32) of the filter disks (30) consist(s) of a nonferrous metal.

9. The filter element according to at least one of claims 1 to 8, **characterized in that** a liner is assigned to the filter element (100), and the filter disk is shaped as an annular disk and at its inside edge is undersized relative to the outer diameter of a liner to be disposed on the inside and/or is oversized at its outer edge relative to the inner diameter of the outer ring.

10. The filter element (100) according to at least one of claims 1 to 9, **characterized in that** the outer ring (14) is integral with a clamping ring (10).

11. The filter element (100'; 100") according to at least one of claims 1 to 10, **characterized in that** the filter element comprises two identical inner supporting plates (40'; 40") which terminate, at their outer periphery, at the middle of a partial outer ring (14'; 14") to produce a T-shaped cross-section in the respective edge region of the inner supporting plate (40'; 14").

12. The filter element according to anyone of the proceeding claims, **characterized in that** the connecting elements (21) are headed screws and nuts.

13. A filter unit for a filter device, said filter unit comprising at least:
- a liner (130) having a pipe casing, and having a plurality of holes (131) in the pipe casing,
- a plurality of stacked filter elements (100; 100') according to at least one of the preceding claims, said filter elements being centered on the liner (130), wherein the connecting elements (21) project outwardly beyond the clamping ring (20) and wherein an inlet flow channel (103) is formed between adjacent filter elements (100; 100') due to the overhang of said connector elements, said inlet flow channel continuing in a flow channel which leads through the filter disks (30) into the inner flow channel (102) of the filter elements (100, 100') as far as at least one hole (131) in the liner (130);
- and a head plate mounted on the liner (30) and covering the stack of filter elements (100; 100').

14. The filter unit according to claim 13, **characterized by** an additional coarse filter element which encloses the filter elements (100) and extends between a base of the filter unit, or the base of a screen cavity into which the filter unit is inserted, and the head plate of the filter unit.

## Revendications

1. Elément filtrant (100 ; 100' ; 100'') pour le filtrage d'un fluide, qui comprend au moins les pièces séparées suivantes disposées dans cet ordre le long de l'axe central :
- une première bague de serrage (10 ; 10') disposée au niveau d'un côté frontal de l'élément filtrant (100 ; 100') ;
- un premier rond filtrant (30 ; 30' ; 30") ;
- un premier panneau de support (40 ; 40' ; 40") pourvu d'évidements, pour soutenir le premier rond filtrant (30 ; 30' ; 30") ;
- un deuxième panneau de support (40 ; 40' ; 40") intérieur pourvu d'évidements ;
- un deuxième rond filtrant (30 ; 30' ; 30") disposé au niveau du deuxième panneau de support (40 ; 40' ; 40") intérieur, et
- une deuxième bague de serrage (20 ; 10') disposée au niveau de l'autre côté frontal, laquelle est reliée à la première bague de serrage (10) par l'intermédiaire d'éléments de liaison (21),
- dans lequel un canal d'écoulement (102 ; 102') intérieur est formé entre le premier et le deuxième panneau de support (40 ; 40' ; 40") intérieur, **caractérisé en ce que** les ronds filtrants (30 ; 30' ; 30") et les panneaux de support (40 ; 40' ; 40") intérieurs sont disposés à l'intérieur d'un boîtier, qui est formé par les bagues de serrage (10, 20 ; 10'), au moins une bague extérieure (14 ; 14' ; 14"), et par des panneaux de support (12, 22 ; 12', 12") extérieurs pourvus d'évidements, qui recouvrent respectivement côté extérieur les ronds filtrants (30 ; 30' ; 30").

2. Elément filtrant (100 ; 100') selon la revendication 1, **caractérisé en ce qu'**au moins un élément d'écartement (50, 50') pour réaliser le canal d'écoulement (102 ; 102') intérieur est disposé entre les panneaux de support (40, 40') intérieurs.

3. Elément filtrant (100") selon la revendication 1, **caractérisé en ce qu'**au moins un panneau de support (40") pour soutenir le canal d'écoulement (102') intérieur est réalisé de manière bombée au moins au niveau de son côté intérieur.

4. Elément filtrant (100") selon au moins l'une quelconque des revendications 1 à 3, **caractérisé en ce qu'**au moins un panneau de support (12") extérieur est bombé au niveau de sa surface intérieure.

5. Elément filtrant selon au moins l'une quelconque des revendications 1 à 4, **caractérisé en ce qu'**au moins un panneau de support extérieur est bombé au niveau de sa surface extérieure.

6. Elément filtrant (100 ; 100' ; 100") selon au moins l'une quelconque des revendications 1 à 5, **caractérisé en ce qu'**au moins un panneau de support (12, 22 ; 12' ; 12") extérieur est intégré dans la bague de serrage (10, 20 ; 10').

7. Elément filtrant (100) selon au moins l'une quelconque des revendications 1 à 6, **caractérisé en ce que** le rond filtrant (30) comprend une bague intérieure (31) et une bague extérieure (32), entre lesquelles au moins un milieu filtrant (33) de forme annulaire est maintenu.

8. Elément filtrant (100) selon la revendication 7, **caractérisé en ce que** la bague intérieure (31) et/ou la bague extérieure (32) des ronds filtrants (30) sont constituées d'un métal non ferreux.

9. Elément filtrant selon au moins l'une quelconque des revendications 1 à 8, **caractérisé en ce qu'**un tube support est associé à l'élément filtrant (100), **en ce que** le rond filtrant présente une forme de disque annulaire et présente, au niveau de son bord intérieur, une dimension inférieure par rapport au diamètre extérieur d'un tube support à disposer à l'intérieur et/ou, au niveau de son bord extérieur, une dimension supérieure par rapport au diamètre intérieur de la bague extérieure.

10. Elément filtrant (100) selon au moins l'une quelconque des revendications 1 à 9, **caractérisé en ce que** la bague extérieure (14) est réalisée en une seule partie avec une bague de serrage (10).

11. Elément filtrant (100' ; 100") selon au moins l'une quelconque des revendications 1 à 10, **caractérisé en ce que** l'élément filtrant comprend deux panneaux de support (40' ; 40") intérieurs de type similaire, lesquelles débouchent au niveau de la périphérie extérieure respectivement au centre sur une bague extérieure partielle (14' ; 14"), dans lequel il en résulte une section transversale en forme de T dans la zone de bord respective du panneau de support intérieur (40' ; 14").

12. Elément filtrant (100' ; 100") selon l'une quelconque des revendications précédentes,
**caractérisé en ce que** les éléments de liaison (21) sont réalisés sous la forme de vis avec des têtes de vis et des écrous.

13. Unité filtrante pour un dispositif de filtrage, comprenant au moins :
- un tube support (130) pourvu d'une gaine tubulaire, lequel présente plusieurs évidements (131) dans la gaine tubulaire,
- plusieurs éléments filtrants (100 ; 100') empilés selon au moins l'une quelconque des revendications précédentes, qui sont centrés sur le tube support (130),
dans laquelle les éléments de liaison (21) font saillie vers l'extérieur au-delà de la bague de serrage (20) et dans laquelle un canal d'écoulement d'entrée (103) est réalisé par leur débord entre des éléments filtrants (100 ; 100') adjacents, lequel canal d'écoulement d'entrée se poursuit en un canal d'écoulement, qui mène à travers les ronds filtrants (30) dans le canal d'écoulement (102) intérieur des éléments filtrants (100, 100') jusqu'à respectivement au moins un évidement (131) dans le tube support (130) ;
- et un panneau de tête installé au niveau du tube support (30) et recouvrant l'empilement d'éléments filtrants (100 ; 100').

14. Unité filtrante selon la revendication 13, **caractérisée par** un élément filtrant sommaire supplémentaire, qui entoure les éléments filtrants (100) et qui s'étend entre un fond de l'unité filtrante ou un fond d'une cavité de tamisage, dans laquelle l'unité filtrante est insérée, et le panneau de tête de l'unité filtrante.
